# EUROPEAN PATENT SPECIFICATION

(11) **EP 4 378 778 B1**
(45) Date of publication and mention of the grant of the patent: **30.04.2025**
(21) Application number: 23201800.2
(22) Date of filing: 05.10.2023
(51) Int. Cl.: B60W 30/09, B60W 30/12, B60W 30/14, B60W 30/16, B60W 30/18, B60W 60/00, B60W 50/08, B60W 50/10

(54) **DRIVING CONTROL APPARATUS FOR VEHICLE**
FAHRSTEUERUNGSVORRICHTUNG FÜR EIN FAHRZEUG
APPAREIL DE COMMANDE DE CONDUITE POUR VÉHICULE

(30) Priority: 30.11.2022 JP 2022191847
(43) Date of publication of application: 05.06.2024
(73) Proprietor: Suzuki Motor Corporation, Hamamatsu-shi, Shizuoka 432-8611 (JP)
(72) Inventor: SATO, Katsuhiko, Hamamatsu-shi 4328611 (JP)
(74) Representative: Plasseraud IP

(56) References cited:
- EP-A1- 4 052 982
- US-A1- 2015 345 964
- US-A1- 2022 281 456

## Description

### [Technical Field]

The present invention relates to a driving control apparatus for a vehicle, and more particularly, relates to vehicle driving control during the operation of an emergency avoidance control for avoiding a collision with another vehicle.

### [Background Art]

An automatically lane keeping system or automated lane keeping system (ALKS) is known in which a vehicle is kept in a lane and is kept traveling at or below a predetermined speed by controlling the forward, backward, left, and right movements of the vehicle without requiring driver operations. The automated lane keeping system has an emergency maneuver (EM) function that shifts to emergency avoidance control for avoiding a collision when a collision with an obstacle is predicted, for example. The EM function is configured to combine the use of steering and deceleration at the maximum deceleration rate to eventually bring the vehicle to a stop, for example. The automated lane keeping system is usually configured such that when there is an override operation by the driver during the operation of the automated lane keeping system, including the EM function, priority is given to the override operation and control is transferred to the driver.

With regard to the EM function, a driving control apparatus for a vehicle that executes a strong brake control to set the relative speed with an obstacle to "0" when it is determined that there is a high probability of collision with the obstacle is disclosed in Patent Literature 1, for example. Steering intervention for collision avoidance is permitted when the predicted travel distance until the relative speed becomes "0" is longer than the relative distance to the obstacle. When the strong brake control is activated, steering intervention is permitted, and when the predicted collision time with an obstacle has fallen to or below a time threshold, the emergency steering control is executed to avoid a collision with the obstacle.

Also, an automated driving vehicle having an automated driving function that automatically drives the vehicle to follow a target path, and a preventive safety function that avoids hazards to the vehicle is disclosed in Patent Literature 2, for example. If imminent danger to the vehicle is predicted while automated driving is being executed, intervention of the preventive safety function in the automated driving is performed. However, if the automated driving system refuses intervention in automated driving in a normal state, intervention in automated driving is suspended.

### [Citation List]

### [Patent Literature]

[Patent Literature 1] JP 2022-060076 A
[Patent Literature 2] JP 2022-091517 A
[Patent Literature 3] EP 4 052 982 A1
[Patent Literature 4] US 2022/281456 A1
[Patent Literature 5] US 2015/345964 A1

### [Summary of Invention]

### [Problem to be Solved by the Invention]

As described above, in an automated lane keeping system, even while the EM function is active, if there is an override operation by the driver, an override is permitted whereby operation of the vehicle is transferred from the system to the driver. However, while driving on a road with poor visibility, for example, there is a possibility that a delay may occur in detection of the situation ahead in the lane of the vehicle, and there is a possibility that the driver will be panicked by the activation of the EM function under conditions of poor visibility and may execute the override by performing excessive driving operations. In the case of such excessive override, it is difficult to perform appropriate collision avoidance operations by spontaneous driver driving operations, and there is a risk of inducing a collision with another vehicle in the opposite lane or veering off the road, for example.

The present invention was created in light of the actual conditions like the above-described, and the objective thereof is to make it possible to suppress excessive override and stably execute emergency avoidance control in an automated lane keeping system when the EM function is activated under conditions of poor visibility of the road.

### [Means for Solving the Problem]

According to the present invention as defined in the independent claim 1, a driving control apparatus for a vehicle, comprises: an environmental condition estimating part including a surrounding recognition function for recognizing a driving lane of the vehicle, neighboring lanes, other vehicles in each of the lanes, and a surrounding environment, and a function for obtaining a state of movement of the vehicle; a path generating part configured to generate a target path on the basis of information obtained by the environmental condition estimating part; and a vehicle control part configured to perform speed control and steering control for the vehicle to follow the target path, the driving control apparatus for a vehicle having: an in-lane automated driving function that performs in-lane automated driving for maintaining a set speed if no other vehicle is present ahead in the lane of the vehicle and maintaining a set inter-vehicle distance if another vehicle is present ahead; an EM function that executes an emergency avoidance control, including activation of emergency braking, if a collision with an obstacle present ahead in the lane of the vehicle is predicted; and an override function that, if there is a control intervention equal to or greater than a prescribed threshold value by the driver while the in-lane automated driving function or the EM function is active, stops the function which is active and transfers control to the driver, wherein: the path generating part is configured to determine whether a poor visibility area in which a degree of visibility of a road is less than a prescribed value exists on the target path; and the override function is configured such that a first threshold value is set as the prescribed threshold value while the in-lane automated driving function is active, and a second threshold value is set as the prescribed threshold value when the EM function is activated in the poor visibility area, the second threshold value being greater than the first threshold value. The override function is configured such that a third threshold value is set as the prescribed threshold value when the EM function is activated outside the poor visibility area and the third threshold value is less than the second threshold value and greater than the first threshold value.

### [Advantageous Effect of Invention]

The driving control apparatus for a vehicle according to the present invention can suppress excessive override and lower the risk of a collision with another vehicle or veering off the road when the EM function is activated under conditions of poor visibility of the road.

### [Brief Description of Drawings]

[Figure 1] Figure 1 is a schematic diagram illustrating a driving control apparatus for a vehicle in an embodiment of the present invention.
[Figure 2] Figure 2 is a schematic plan view illustrating an external sensor group of a vehicle.
[Figure 3] Figure 3 is a block diagram illustrating a driving control system for a vehicle.
[Figure 4] Figure 4 is a state transition diagram of control in the driving control system for a vehicle.
[Figure 5] Figure 5 is a flowchart explaining the flow of control of an EM function.

### [Mode for Carrying Out the Invention]

### First Embodiment

Hereinafter, a first embodiment of the present invention will be described in detail with reference to the drawings. The driving control apparatus for a vehicle according to the present embodiment has the function of an automated lane keeping system (ALKS) that recognizes the position of the vehicle and the surrounding environment of the vehicle using external sensors such as radars and cameras, and controls vehicle speed and steering to perform automatic driving in a single lane at or below a predetermined speed (for example, 60 km/h).

The ALKS is a system combining an adaptive cruise control system (ACCS) and a lane keeping assistance system (LKAS). The main functions of the ALKS include lane marking recognition, in-lane vehicle position recognition, target vehicle speed and target path generation, vehicle speed control and in-lane path following control, automated steering, and the like. Here, vehicle speed control and in-lane path following control mean the control of vehicle speed and steering necessary to achieve a target vehicle speed and target path. Automated steering means that steering is performed using electric power steering with a steering torque necessary to achieve a target steering angle for path following.

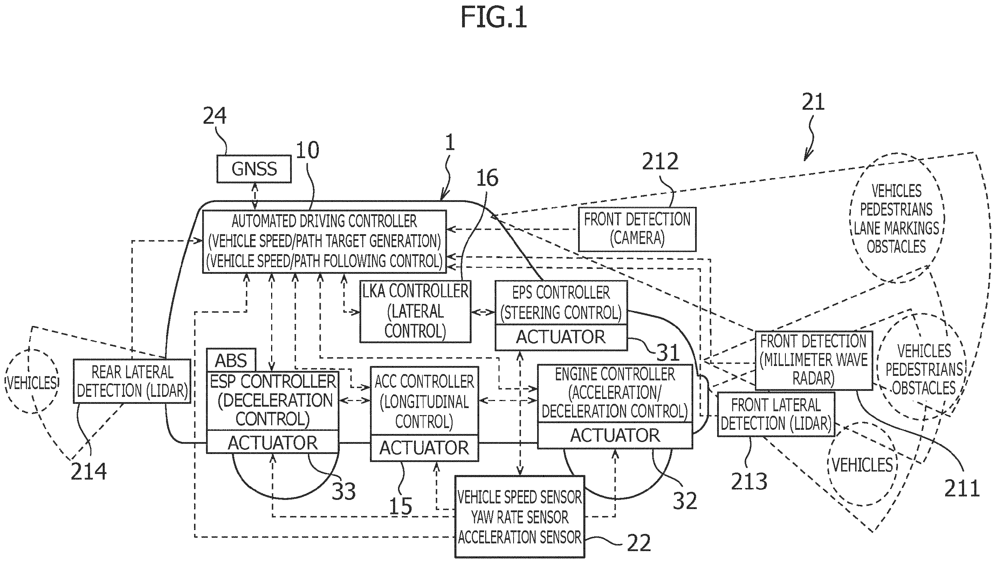

In Figures 1 to 3, a vehicle 1 provided with a driving control apparatus according to the present embodiment is provided with, in addition to typical automobile components such as an engine, a vehicle body, and tires, an external sensor 21 that detects the vehicle-surrounding environment, an internal sensor 22 that detects vehicle information, including the state of movement, a map information database 23, positioning means 24, a controller/actuator group for speed control and steering control, an ACC controller 15 for inter-vehicle distance control, an LKA controller 16 for lane keeping control, and an automated driving controller 10 for unifying the above to execute in-lane automated driving control, so that recognition, determination, and control conventionally performed by the driver are performed by the vehicle side.

The controller/actuator group for speed control and steering control includes an electric power steering (EPS) controller 31 for steering control, an engine controller 32 for acceleration/deceleration rate control, and an ESP/ABS controller 33. An ESP (Electronic Stability Program, registered trademark) includes an anti-lock braking system (ABS) to form a stability control system (vehicle behavior stabilization control system).

The external sensor 21 is composed of a plurality of detection means for inputting external data such as image data or point cloud data, representing lane markings on a road defining the lane of the vehicle and neighboring lanes, and presence of, and relative distance from, obstacles such as other vehicles and people around the vehicle, into the automated driving controller 10.

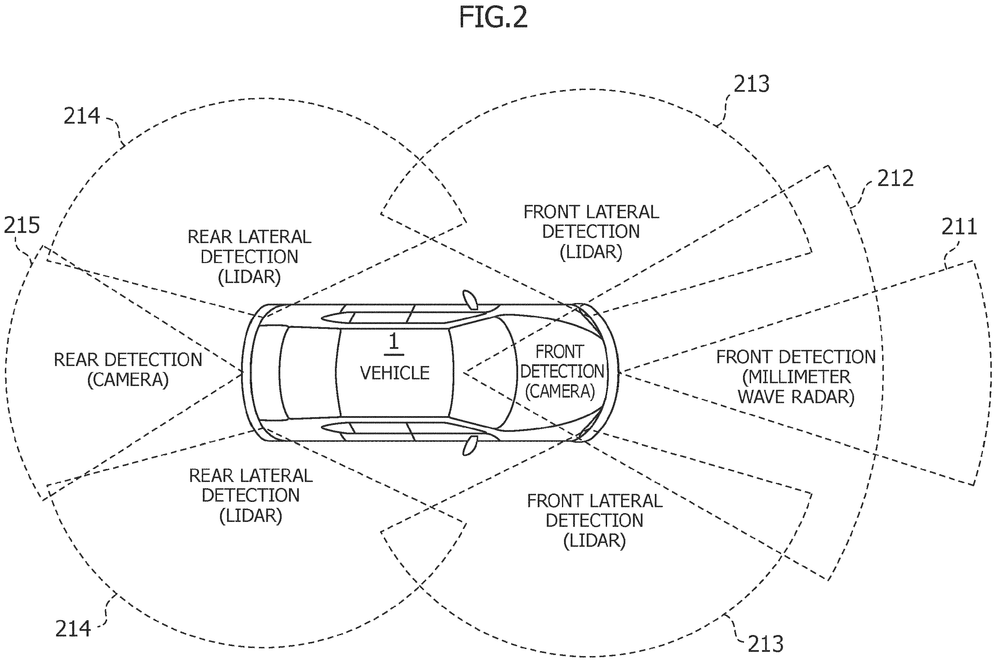

For example, as illustrated in Figure 2, the vehicle 1 is provided with a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215. The external sensor 21 is disposed to cover 360 degrees around the vehicle and enable detection of the positions of, and distances from, other vehicles, obstacles, and the like, and lane marking positions of the lane of the vehicle and the neighboring lanes, within a predetermined range in each of the front, rear, left, and right directions of the vehicle. Note that a millimeter wave radar (or LIDAR) can also be added as the rear detection means 215.

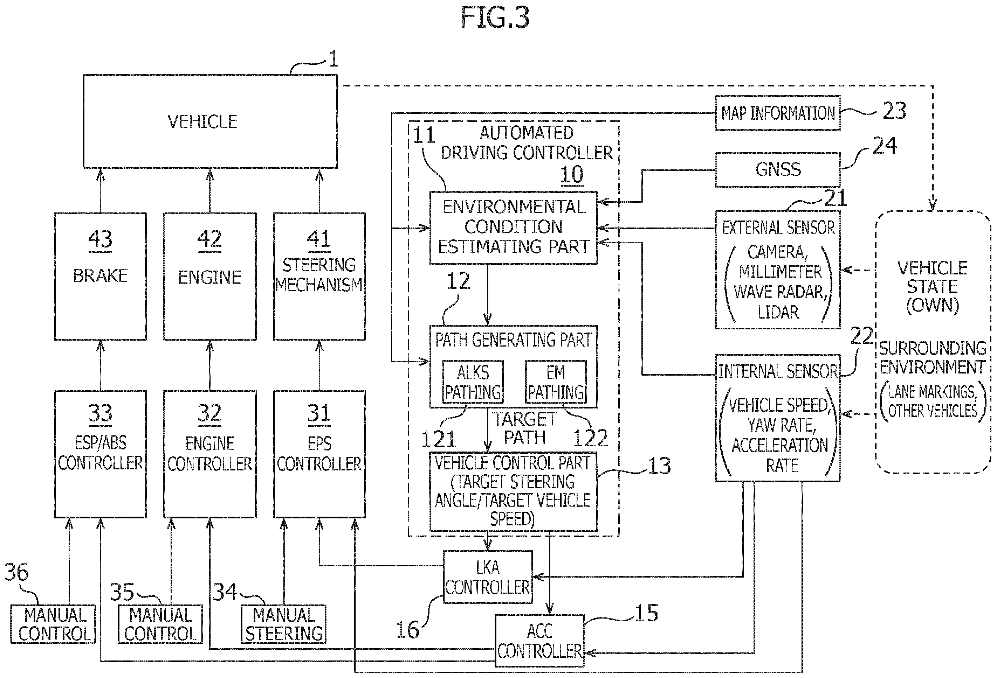

The internal sensor 22 is composed of a plurality of detection means, such as a vehicle speed sensor, a yaw rate sensor, and an acceleration sensor, to measure physical quantities representing the state of movement of the vehicle. As illustrated in Figure 3, each of the measurement values from the internal sensor 22 is input into the automated driving controller 10, the ACC controller 15, the LKA controller 16, and the EPS controller 31, and is computationally processed together with input from the external sensor 21.

The external sensor 21 and the internal sensor 22 are configured to activate simultaneously with the startup of the vehicle 1 and to constantly monitor the surrounding environment and vehicle information.

The automated driving controller 10 includes an environmental condition estimating part 11, a path generating part 12, and a vehicle control part 13, and includes a computer for executing functions as described below, that is constituted of ROM for storing programs and data, a CPU for performing computational processing, RAM for reading out the programs and data and storing dynamic data and computational processing results, an input/output interface, and the like.

The environmental condition estimating part 11 acquires the absolute location of the vehicle 1 by matching the vehicle location information according to the positioning means 24 such as a global navigation satellite system (GNSS) with map information in the map information database 23. The environmental condition estimating part 11 estimates, on the basis of external data such as image data and point cloud data acquired by the external sensor 21, the positions of lane markings of the lane of the vehicle and the neighboring lanes, and the positions and speeds of other vehicles. Note that instead of acquiring the absolute location of the vehicle 1 on the basis of the vehicle location information according to the positioning means 24 and the map information in the map information database 23, the environmental condition estimating part 11 can also be configured to obtain the relative position of the vehicle 1 with respect to a lane marking with a neighboring lane obtained from the external sensor 21.

The environmental condition estimating part 11 is further configured to determine whether an obstacle ahead in the lane of the vehicle is a stationary object or a moving object. A stationary object is an obstacle the absolute location of which is not moving, such as a parked vehicle, safety equipment for road construction, or the like, for example. A moving object is an obstacle the absolute location of which is moving, such as another vehicle ahead, a pedestrian, an oncoming vehicle, or the like, for example. An obstacle can be determined to be a stationary object or to be a moving object on the basis of the relative speed between the vehicle 1 and the obstacle, for example.

Here, an oncoming vehicle is a vehicle traveling in the opposite direction to the direction of travel of the vehicle 1, and in particular, is a vehicle traveling so as to approach the vehicle 1 in the lane in which the vehicle 1 is traveling. The determination of whether an obstacle is an oncoming vehicle can be made on the basis of, for example, information such as the absolute location of the vehicle 1, the positions of lane markings of the lane of the vehicle and the neighboring lanes, and the positions and speeds of other vehicles, which are obtained from the external sensor 21, the internal sensor 22, the map information database 23, and the positioning means 24. That is, the environmental condition estimating part 11 also functions as an oncoming vehicle detecting part.

For example, the environmental condition estimating part 11 detects the optical flow of obstacles existing ahead of the vehicle on the basis of image data of the area ahead of the vehicle acquired by the external sensor 21 (camera 212). Optical flow is a vector representation of the movement of an object between image frames in a plurality of temporally consecutive image frames in a video image. Therefore, by detecting the optical flow, the movement direction of an obstacle can be determined. If an obstacle is moving so as to approach the vehicle 1 in the lane of the vehicle, the environmental condition estimating part 11 can determine that the obstacle is an oncoming vehicle.

Note that it may be configured to detect an oncoming vehicle on the basis of information acquired from the millimeter wave radar 211, the LIDAR 213, or the like instead of image data acquired by the camera 212. Also, if vehicle-to-vehicle communication with other vehicles or infrastructure-to-vehicle communication with roadside equipment via a communication module (not illustrated) is possible, the environmental condition estimating part 11 may also determine an oncoming vehicle on the basis of information obtained through vehicle-to-vehicle communication or infrastructure-to-vehicle communication.

In addition, the environmental condition estimating part 11 acquires the state of movement of the vehicle from internal data measured by the internal sensor 22.

The path generating part 12 is configured to generate a target path to a final destination from the vehicle location estimated by the environmental condition estimating part 11. The path generating part 12 includes an ALKS pathing, or path-setting, part 121 and an EM path-setting part 122. In the state in which the ALKS is active, the ALKS path-setting part 121 generates a target path (target path for the ALKS) for automated driving in a single lane on the basis of the positions of lane markings of the neighboring lanes, the positions and speeds of other vehicles, the state of movement of the vehicle 1, and the like which are estimated by the environmental condition estimating part 11.

The EM path-setting part 122 generates an emergency target path (target path for EM) to guide and bring the vehicle to a stop at the target stop position in the emergency avoidance control for avoiding a collision with an obstacle. The EM path-setting part 122 is further configured to pre-set an emergency evacuation area for setting a target stop position on the target path for the ALKS in case the emergency avoidance control is executed. The EM path-setting part 122 sets the target stop position according to the activation mode of the EM function as described later.

The path generating part 12 is further configured to determine whether a poor visibility area, in which visibility is poor, exists on the target path on which the vehicle 1 travels.

The vehicle control part 13 calculates a target vehicle speed and a target steering angle on the basis of the target path generated by the path generating part 12. The vehicle control part 13 transmits a speed command for constant-speed driving or inter-vehicle distance maintenance/following driving to the ACC controller 15, and transmits a steering angle command for path following to the EPS controller 31 via the LKA controller 16.

Note that the vehicle speed is also input into the EPS controller 31 and the ACC controller 15. Since the steering reaction force varies depending on the vehicle speed, the EPS controller 31 references a steering angle-steering torque map according to vehicle speed and transmits a torque command to a steering mechanism 41. By controlling an engine 42, a brake 43, and the steering mechanism 41 with the engine controller 32, the ESP/ABS controller 33, and the EPS controller 31, the movement of the vehicle 1 in the longitudinal direction and the lateral direction is controlled.

### Overview of Automated Lane Keeping System

Next, an overview of the automated lane keeping system (ALKS) will be described. The ALKS is a system combining an adaptive cruise control system (ACCS) and a lane keeping assistance system (LKAS), enabling automated lane keeping driving (automated in-lane driving) in the state in which the ACCS by the ACC controller 15 and the LKAS by the LKA controller 16 are both active.

The path generating part 12 of the automated driving controller 10, specifically the ALKS path-setting part 121, generates a target path and a target vehicle speed for activating the ALKS on the basis of external information (lanes, vehicle location, the positions and speeds of other vehicles traveling in the vehicle's own driving lane and the neighboring lanes, and the presence or absence of pedestrians and other obstacles) acquired by the external sensor 21 and internal information (vehicle speed, yaw rate, acceleration rate) acquired by the internal sensor 22.

The vehicle control part 13 estimates the speed/attitude/lateral displacement of the vehicle Δt seconds later based on the vehicle location and the movement characteristics of the vehicle, that is, from the relationship between the yaw rate γ and the lateral acceleration rate (d²y/dt²) produced by vehicle movement according to the front wheel steering angle δ produced when steering torque T is imparted to the steering mechanism 41 while driving at the vehicle speed V. The vehicle control part 13 issues a steering angle command to the EPS controller 31 via the LKA controller 16 such that the lateral displacement will be yt Δt seconds later, and issues a speed command to the ACC controller 15 such that a speed Vt will be obtained Δt seconds later.

The ACC controller 15, the LKA controller 16, the EPS controller 31, the engine controller 32, and the ESP/ABS controller 33 operate independently and irrespectively of the automated steering, but are also operable according to command inputs from the automated driving controller 10 while the ALKS is active.

Upon receiving a deceleration command from the ACC controller 15, the ESP/ABS controller 33 controls the vehicle speed by outputting a hydraulic command to the actuator and controlling the braking force of the brake 43. Also, upon receiving an acceleration/deceleration command from the ACC controller 15, the engine controller 32 controls the actuator output (throttle position) to thereby issue a torque command to the engine 42 so as to control the driving force and to control the vehicle speed.

The adaptive cruise control system (ACCS) functions as a combination of hardware and software, such as a millimeter wave radar serving as the front detection means 211 included in the external sensor 21, the ACC controller 15, the engine controller 32, and the ESP/ABS controller 33.

That is, in the case in which a vehicle ahead is not present, the ACCS is configured to perform constant-speed driving with the ACC set speed (set speed) treated as the target vehicle speed. In the case of catching up to a vehicle ahead (the case in which the speed of the vehicle ahead is the ACC set speed or less), the vehicle follows the vehicle ahead at the speed matching the speed of the vehicle ahead while maintaining an inter-vehicle distance (set inter-vehicle distance) according to a set time gap (inter-vehicle time = inter-vehicle distance/speed of vehicle). Also, in the case in which the vehicle speed of the vehicle ahead is faster than the speed of the vehicle or the vehicle ahead is no longer ahead of the vehicle, the ACCS is configured to accelerate to a set speed at a set acceleration rate.

The lane keeping assistance system (LKAS) detects the lane markings and the vehicle location by the environmental condition estimating part 11 of the automated driving controller 10 on the basis of image data obtained by the external sensor 21 (cameras 212 and 215), and performs steering control by the EPS controller 31 via the LKA controller 16 so as to be able to drive in the lane center.

That is, the EPS controller 31 that has received a steering angle command from the LKA controller 16, references a map of vehicle speed-steering angle-steering torque to transmit a torque command to an actuator (EPS motor), and issues a front wheel steering angle to serve as the target for the steering mechanism 41.

As described above, the ALKS executes an automated lane keeping function by combining longitudinal control (speed control and inter-vehicle distance control) by the ACC controller 15 and lateral control (steering control and lane keeping control) by the LKA controller 16.

### Emergency Avoidance Control When Collision Predicted

If a collision with an obstacle is predicted for some reason, such as another vehicle cutting in or the appearance of an oncoming vehicle, for example, while the ALKS is active, the emergency maneuver (EM) function is activated and the emergency avoidance control is executed. The EM function includes autonomous emergency braking (AEB) for collision avoidance or collision mitigation.

The environmental condition estimating part 11 constantly calculates a predicted time to collision (TTC = inter-vehicle distance/relative speed) with an obstacle on the basis of the information (for example, the inter-vehicle distance and relative speed) on the obstacle (for example, a vehicle ahead) detected by the external sensor 21 and the vehicle speed of the vehicle 1 detected by the internal sensor 22. If the probability of collision with the obstacle is determined to be high, such as in the case in which the predicted time to collision TTC is a prescribed value or less, the automated driving controller 10 transmits a deceleration request (hydraulic command) to the actuator of the brake 43 via the ACC controller 15 to activate autonomous emergency braking.

### Determination of Poor Visibility Area

In the map information database 23 in the present embodiment, information on a poor visibility area existing on the target path of the vehicle 1 is also stored in advance, in association with the map information. A poor visibility area refers to an area in which the degree of visibility of the road is less than a prescribed value and the visibility is poor.

The degree of visibility can be expressed as a visible distance expressing the distance from the vehicle 1 to a visible obstacle on the road, for example. The visible distance refers to the distance along the target path from the current location of the vehicle 1 to the obstacle present at the farthest location that is visible on the target path. Visibility can be determined to be better if the visible distance is farther, and to be worse if the visible distance is nearer.

How far away from the vehicle 1 the obstacle can be seen is determined by not only the shape of the road but also the sizes and shapes of structures existing between the vehicle 1 and the obstacle. For example, distant obstacles are visible if there are no structures in the vicinity, even on a steeply curving road with a small radius of curvature. On the other hand, if a sidewall exists along the road, obstacles may be obscured by the sidewall, even on a gently curving road with a large radius of curvature.

Accordingly, in the present embodiment, the visible distance at which an obstacle is visible is determined on the basis of road information about the road alignment, landmarks that exist along the road, and the like. Information about road alignment is information about the shape of the road and includes the radius of curvature of the road and the vertical grade, for example. Landmarks include both natural landforms and manmade structures, and information about landmarks that exist along the road includes information about the shapes, sizes, and the like of structures that exist near the road, such as sidewalls and buildings, for example.

The prescribed value for determining the degree of visibility can be defined as, for example, the braking distance required for the vehicle 1 to come to a braking stop without colliding with an obstacle after detecting the obstacle on the target path. The braking distance is determined on the basis of road information about the radius of curvature and vertical grade of the road, landmarks that exist along the road, and the like, as well as speed limit information on the target path. An area in which the visible distance is less than the braking distance is determined to be a poor visibility area in which the degree of visibility of the road is poor.

### Setting of Emergency Evacuation Area

The EM path-setting part 122 of the path generating part 12 of the automated driving controller 10 is configured to set, on the basis of the location of the vehicle acquired by the environmental condition estimating part 11 and map information on the vehicle surroundings acquired from the map information database 23, an emergency evacuation area on the target path in case of activation of the EM function constantly while the automated lane keeping driving by the ALKS is being executed. That is, the EM path-setting part 122 also functions as an evacuation area setting part.

An emergency evacuation area is set in an area on the side edge of the road on which the vehicle 1 travels. That is, in the case of left-hand traffic, an emergency evacuation area is set on the left side of the road, including an area such as a shoulder or a roadside strip outside the lane in which the vehicle 1 travels, whereas in the case of right-hand traffic, an emergency evacuation area is set on the right side of the road, including an area such as a shoulder or a roadside strip outside the lane in which the vehicle 1 travels. The emergency evacuation area is set as an area along the side edge of the road, with a predetermined width that includes the lateral width (vehicle width) of the vehicle 1, for example.

The EM path-setting part 122 estimates, on the basis of the vehicle location and the map information on the vehicle surroundings, the road shape on which the vehicle 1 is traveling and sets an emergency evacuation area corresponding to the road shape. The emergency evacuation area is set on the target path ahead in the direction of travel of the vehicle, and is constantly updated as the vehicle 1 moves.

### State Transitions of System

While the ALKS is active, the environmental condition estimating part 11 of the automated driving controller 10 constantly monitors whether the driving state of the vehicle, the surrounding environmental conditions, the driver state, and the like are maintained within an operational design domain (ODD) of the system on the basis of the surrounding environment acquired by the external sensor 21, the vehicle information acquired by the internal sensor 22, and the like.

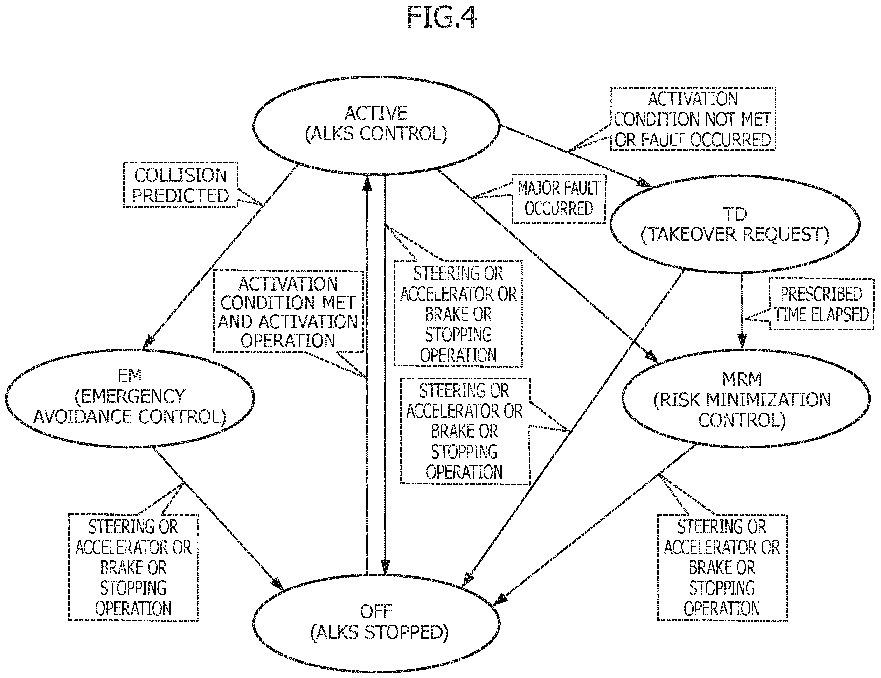

Figure 4 illustrates state transitions of control in the ALKS. The environmental condition estimating part 11 determines whether there are deviations from the system operating conditions and detects whether there are abnormalities or faults in the system, on the basis of the driving state of the vehicle, the surrounding environmental conditions, the driver state, and the like.

If a deviation from the system operating conditions is determined, or if an abnormality or fault is detected in the system, an operation takeover request (transition demand (TD)) is issued from the system to the driver. If the driver takes over driving operations within a prescribed time (for example, 10 seconds) after the operation takeover request (TD), automated lane keeping driving transitions to manual driving (the ALKS stops).

On the other hand, if the driving operation takeover is not performed within the prescribed time after the operation takeover request (TD), a minimal risk maneuver (MRM) function is activated and risk minimization control is performed. The MRM function means a function that automatically shifts to a minimal risk condition when the driver is unable to take over operations. Specifically, the MRM includes control to evacuate to the shoulder through automated steering or to decelerate to a stop in the lane (safe stop) by the automated driving controller 10.

Note that when the environmental condition estimating part 11 determines that a serious fault has occurred in the system (such as engine hydraulic pressure reduction, engine water temperature rise, or brake system abnormality that may cause an accident, a fire, or the like) while the ALKS is active, the operation takeover request (TD) is not made so that the MRM function is activated immediately to perform the risk minimization control.

If a collision with an obstacle is predicted while the ALKS is active, the EM function described above is activated and the emergency avoidance control is executed. When the EM function is activated, the brake 43 is controlled via the ACC controller 15 and the steering mechanism 41 is controlled via the LKA controller 16 so that the vehicle 1 is guided to a stop at the target stop position set by the EM path-setting part 122.

### Override Function

The driving control apparatus described above is configured to allow an override due to a control intervention by the driver while the ALKS is active or while the EM function and the MRM function are active. That is, the override function is a function that stops active functions and transfers control or authority to the driver if there a control intervention equal to or greater than a predetermined threshold by the driver while the ALKS, the EM function, and the MRM function are active.

If an acceleration override due to an acceleration control intervention by the driver or a deceleration override due to a deceleration control intervention is executed, longitudinal control (speed control, inter-vehicle distance control) is stopped and is shifted to a manual driving mode, allowing manual acceleration/deceleration controls 35, 36 to be performed. If a steering override due to a steering intervention by the driver is executed, lateral control (steering control, lane keeping control) is stopped and is shifted to a manual driving mode, allowing manual steering 34.

Specifically, longitudinal control is overridden when the engine torque request from the manual control 35 of the accelerator pedal by the driver or the deceleration request from the manual control 36 of the brake pedal is equal to or greater than a corresponding override threshold. These override threshold values (acceleration/deceleration override threshold values) related to acceleration/deceleration operations are set to, for example, an accelerator control input (engine torque command value) or brake control input (ESP hydraulic command value) at which the driver is judged to have intentionally performed an acceleration/deceleration operation according to the acceleration/deceleration characteristics and driving state of the vehicle.

Lateral control is overridden when a steering torque from the manual steering 34 by the driver is equal to or greater than an override threshold value. The override threshold (steering override threshold) related to a steering operation is set according to the steering characteristics and the driving state of the vehicle 1, for example. It can be configured such that the manual steering control 34 and the manual acceleration/deceleration controls 35, 36 are detected by the internal sensor 22, for example.

As described above, the override function is executable even while the EM function is active. If there is a switch from the state in which automated lane keeping driving was being performed by the ALKS to a hazard avoidance mode in which the EM function is executed, there is a possibility that the emergency autonomous braking by the EM function may cause the driver to panic. Consequently, if an excessive override, such as excessive acceleration/deceleration operations or excessive steering operations, is performed by the panicked driver, the behavior of the vehicle 1 may become unstable or the vehicle 1 may suddenly approach a nearby obstacle or nearby structure.

In particular, for example, if the vehicle 1 is traveling through a poor visibility area with poor visibility on the road, there is a possibility that a delay may occur in the detection of the situation ahead in the lane of the vehicle by the system compared to the case of traveling in an area with good visibility. If the EM function is activated in such a situation with poor visibility, there is a possibility that an override may be executed due to the driver being panicked and performing excessive driving operations. In the case of such excessive override, it is difficult to perform appropriate collision avoidance operations by spontaneous driver driving operations, and there is a risk of inducing a collision with another vehicle in the opposite lane or veering off the road, for example.

Accordingly, in the driving control apparatus according to the present embodiment, if the EM function is activated while the ALKS is active, an override due to excessive driving operations by the driver is suppressed by changing the override threshold values to values greater than normal. Furthermore, if the EM function is activated in a poor visibility area while the ALKS is active, the override threshold values are set to even greater values.

Accordingly, the avoidance control of the EM function by the automated driving controller 10 is continued even when a panicked driver performs excessive acceleration/deceleration operations or excessive steering operations in response to the emergency avoidance control in a situation of poor visibility, which would normally cause the EM function to be overridden and to be shifted to the manual driving mode. As a result, it is possible to avoid situations, such as a collision with another vehicle in the opposite lane or veering off the road, for example, which may be caused by excessive acceleration/deceleration operations or excessive steering operations by the driver.

### Setting of Override Threshold Values

Hereinafter, the setting of the override threshold values in the present embodiment will be described. Note that the override threshold values include the acceleration/deceleration override threshold values related to acceleration/deceleration operations and the steering override threshold value related to a steering operation. Also, the acceleration/deceleration override threshold values include an accelerator override threshold value related to an accelerator operation and a brake override threshold value related to a brake operation.

### 1. Normal override threshold values

If an engine torque command value due to an accelerator operation by the driver is greater than an engine torque command value for constant-speed driving or inter-vehicle distance maintaining/following driving, an accelerator override is executed. In this case, the accelerator operation by the driver is given priority over the automated lane keeping driving by the ALKS. Normally, for example, an engine torque command value obtained from an engine torque map set according to the vehicle speed and the gear stage is set as an accelerator override threshold value OEd.

If an ESP hydraulic command value that causes a deceleration with respect to constant-speed driving or inter-vehicle distance maintaining/following driving is given by a brake operation by the driver, a brake override is executed. In this case, the brake operation by the driver is given priority over the automated lane keeping driving by the ALKS. For example, an ESP hydraulic command value that causes a deceleration by a speed of 2 km/h with respect to constant-speed driving or inter-vehicle distance maintaining/following driving or an ESP hydraulic command value that corresponds to a deceleration rate of 0.2 m/s² with respect to an ACC set acceleration is set as a brake override threshold value OPd.

As a steering override threshold value OTd, a threshold value for the case of additive steering and a threshold value for the case of subtractive steering are set separately. In the case of additive steering, for example, a steering torque corresponding to a steering angle at which a virtual lateral displacement y't for reaching a virtual lateral position after t seconds becomes yt+α (where α is a constant determined on the basis of the vehicle speed) is set as the steering override threshold value OTd. Note that a steering torque corresponding to the steering angle can be computed from a vehicle speed-steering angle-steering torque map.

In the case of subtractive steering, for example, a value that can be determined not to be very small and is applied in a direction of reducing the steering torque to a value (steering torque target value) obtained by converting a steering angle at which the virtual lateral displacement y't for reaching the virtual lateral position after t seconds becomes yt+α into the steering torque is set as the steering override threshold value OTd. Note that the value can be determined as being very small or not on the basis of the steering angle and the steering angle speed, for example.

### 2. Override threshold values when EM is activated outside poor visibility area

An accelerator override threshold value OEemg when the EM is activated outside a poor visibility area is set to a value greater than the normal accelerator override threshold value OEd described above. For example, an engine torque command value selected from the range of 120%-250%, preferably 150%-220%, of the normal accelerator override threshold value OEd can be set as the accelerator override threshold value OEemg when the EM is activated. That is, OEemg > OEd.

A brake override threshold value OPemg when the EM is active outside a poor visibility area is set to a value greater than the normal brake override threshold value OPd described above. For example, an ESP hydraulic command value selected from the range of 120%-250%, preferably 150%-220%, of the normal brake override threshold value OPd can be set as the brake override threshold value OPemg when the EM is activated. That is, OPemg > OPd.

A steering override threshold value OTemg when the EM is activated outside a poor visibility area is set to a value greater than the normal steering override threshold value OTd described above. For example, in the case of additive steering, a value obtained by converting a steering angle computed from a virtual lateral displacement y"t (= yt+β, where β > α), with respect to the normal virtual lateral displacement y't, and the movement characteristics of the vehicle into a steering torque can be set as the steering override threshold value OTemg. In the case of subtractive steering, a value obtained by converting a steering angle computed from the virtual lateral displacement y"t (= yt-γ, where γ is greater than a lateral displacement corresponding a steering torque X'Nm), with respect to the normal virtual lateral displacement y't, and the movement characteristics of the vehicle into a steering torque can be set as the steering override threshold value OTemg. That is, OTemg > OTd.

### 3. Override threshold values when EM is activated in poor visibility area

When the EM is activated in a poor visibility area, values even greater than the override threshold values when the EM is activated outside a poor visibility area described above are set as the override threshold values.

An accelerator override threshold value OEemb when the EM is activated in a poor visibility area is set to a value even greater than the accelerator override threshold value OEemg when the EM is activated outside a poor visibility area described above. That is, OEemb > OEemg > OEd.

A brake override threshold value OPemb when the EM is activated in a poor visibility area is set to a value even greater than the brake override threshold value OPemg when the EM is activated outside a poor visibility area described above. That is, OPemb > OPemg > OPd.

A steering override threshold value OTemb when the EM is activated in a poor visibility area is set to a value even greater value than the steering override threshold value OTemg when the EM is activated outside a poor visibility area described above, in the case of both additive steering and subtractive steering. That is, OTemb > OTemg > OTd.

In this way, the override threshold values (second threshold values) when the EM is activated in a poor visibility area are set to values even greater than the normal override threshold values (first threshold values). Also, the override threshold values (third threshold values) when the EM is activated outside a poor visibility area are set to values which are less than the override threshold values (second threshold values) when the EM is activated in a poor visibility area, and greater than the normal override threshold values (first threshold values).

### Flow of EM Function Activation While ALKS Active

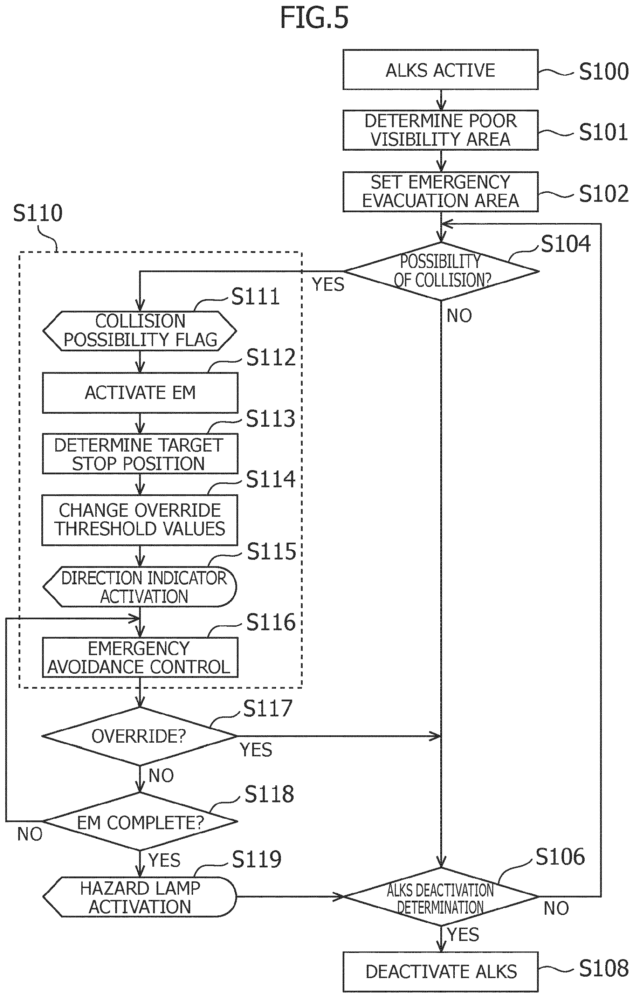

Next, the flow of control in the case in which the EM function is executed while the ALKS is active will be described. Figure 5 illustrates a flowchart explaining the flow of control of the EM function according to the present embodiment.

### (1) Activation of automated lane keeping system (ALKS)

If the vehicle speed of the vehicle 1 is a prescribed vehicle speed (for example, 60 km/h) or less and a prescribed activation condition is satisfied, automated driving in a single lane by the ALKS is executed (step S100). The automated driving controller 10 performs driving controls of the vehicle 1 according to the target path and target speed for the ALKS set by the path generating part 12.

### (2) Poor visibility area determination

The path generating part 12 determines, on the basis of the information on a poor visibility area associated with the location information on the vehicle 1 acquired by the environmental condition estimating part 11 and the map information acquired from the map information database 23 as described above, whether a poor visibility area in which the degree of visibility of the road is less than a prescribed value exists on the target path (step S101).

### (3) Emergency evacuation area setting

The EM path-setting part 122 of the path generating part 12 sets an emergency evacuation area on the target path on the basis of the vehicle location acquired by the environmental condition estimating part 11 and the map information on the vehicle surroundings acquired from the map information database 23 (step S102). The emergency evacuation area is constantly updated while the ALKS is active.

### (4) Determination of collision possibility

As described above, the environmental condition estimating part 11 determines the possibility or probability of a collision with an obstacle in the vehicle surroundings on the basis of the information on obstacles detected by the external sensor 21 and the vehicle information on the vehicle 1 detected by the internal sensor 22 (step S104).

For example, if the predicted time to collision TTC with an obstacle is a prescribed value or less, the probability of a collision with the obstacle is determined to be high, and control shifts to the EM function to execute the emergency avoidance control (step S110). If the predicted time to collision TTC with an obstacle is greater than the prescribed value and the probability of a collision is determined to be low, the flow proceeds to step S103. Note that if the possibility of a collision with an obstacle is determined to be high, the environmental condition estimating part 11 also determines whether the obstacle is a stationary object or a moving object.

### (5) EM function

When control shifts to the EM function, a collision possibility flag is raised (step S111) and activation of the EM function, including activation of the autonomous emergency braking for collision avoidance or collision mitigation, is started (step S112).

### (6) Target stop position determination

The EM path-setting part 122 of the path generating part 12 sets a target stop position according to the activation mode of the EM function (step S113). Specifically, if the reason or cause for activation of the EM function is a stationary object such as a parked vehicle on the target path, that is, if the EM function is activated by the detection of a stationary object, the target stop position is set inside the driving lane of the vehicle 1. On the other hand, if the reason for activation of the EM function is a moving object such as an oncoming vehicle or a pedestrian on the target path, that is, if the EM function is activated by the detection of a moving object, the target stop position is set inside the emergency evacuation area set in step S102.

The EM path-setting part 122 determines the target stop position for stopping the vehicle 1 on the basis of the location and speed of the vehicle 1 and the maximum deceleration rate for emergency avoidance control, and generates a target path for EM to the determined target stop position.

### (7) Override threshold value changing

The override threshold values are changed from the normal override threshold values (OEd, OPd, OTd) to the override threshold values when the EM is activated described above (step S114). Specifically, if the EM function is activated while driving in a poor visibility area determined in step S101, the normal override threshold values (OEd, OPd, OTd) are changed to the override threshold values (OEemb, OPemb, OTemb) for the EM activation in a poor visibility area. If the EM function is activated while driving outside a poor visibility area, the normal override threshold values (OEd, OPd, OTd) are changed to the override threshold values (OEemg, OPemg, OTemg) for the EM activation outside a poor visibility area.

### (8) Execution of emergency avoidance control

The automated driving controller 10 activates a direction indicator (not illustrated) in the direction of the target stop position (step S115). The vehicle control part 13 performs a steering avoidance control and a maximum deceleration rate braking control. Accordingly, the vehicle 1 is guided along the target path for EM to the target stop position while decelerating at the maximum deceleration rate (step S116).

### (9) Override determination

The automated driving controller 10 is configured to determine whether or not an override is executed due to a control intervention by the driver while the ALKS is active, and the determination as to whether or not an override is executed is continued even after the activation of the EM function (step S117). If the engine torque request from the manual control 35 of the accelerator pedal by the driver, the deceleration request from the manual control 36 of the brake pedal, or the steering torque from the manual steering 34 is equal to or greater than the accelerator override threshold value, the brake override threshold value, or the steering override threshold value set in step S114, the execution of an override is determined and the flow proceeds to step S106 to deactivate the ALKS. If non-execution of an override is determined, the flow proceeds to step S118.

### (10) EM function completion determination

The environmental condition estimating part 11 determines whether the emergency avoidance control is complete on the basis of the vehicle state and the surrounding environment of the vehicle 1 (step S118). Specifically, if there is no longer an imminent threat of a collision due to an emergency stop or a change in the surrounding environment of the vehicle 1, or if the system is put into an inactive state through the operation of a switch (not illustrated) by the driver, the emergency avoidance control is determined to be complete. In this case, the accelerator override threshold value, brake override threshold value, or steering override threshold value set in step S114 is reset to the normal override threshold value (OEd, OPd, OTd), and the hazard lights are made to blink (step S119). On the other hand, if the emergency avoidance control is determined to be incomplete, the flow returns to step S116 and the emergency avoidance control is continued.

### (11) ALKS deactivation

The environmental condition estimating part 11 determines whether to deactivate the ALKS on the basis of the vehicle state and the surrounding environment of the vehicle 1 (step S106). Specifically, if the execution of an override due to a control intervention by the driver is determined in step S117 or if the emergency avoidance control is determined to be complete in step S118, or the system is put into an inactive state through the operation of a switch (not illustrated) by the driver, it is determined to deactivate the ALKS system, the ALKS is stopped, and control shifts to the manual driving mode (step S108). On the other hand, if a negative determination is made in step S106, the flow returns to step S104 and the ALKS system remains active.

In the driving control apparatus for the vehicle 1 according to the first embodiment described above, operation and effects like the following can be exhibited.

A driving control apparatus for a vehicle comprises: an environmental condition estimating part 11 including a surrounding recognition function for recognizing a driving lane of the vehicle, neighboring lanes, other vehicles in each of the lanes, and a surrounding environment, and a function for obtaining a state of movement of the vehicle; a path generating part 12 for generating a target path on the basis of information obtained by the environmental condition estimating part 11; and a vehicle control part 13 configured to perform speed control and steering control for making the vehicle follow the target path. The driving control apparatus has an in-lane automated driving (automated lane keeping driving) function that performs in-lane automated driving for maintaining a set speed if no other vehicle is present ahead in the lane of the vehicle and maintaining a set inter-vehicle distance if another vehicle is present ahead, an EM function that executes an emergency avoidance control, including activation of emergency braking, if a collision with an obstacle present ahead in the lane of the vehicle is predicted, and an override function that, if there is a control intervention equal to or greater than a prescribed threshold value by the driver while the in-lane automated driving function or the EM function is active, stops the active function and transfers control to the driver. The path generating part 12 is configured to determine whether a poor visibility area in which the degree of visibility of the road is less than a prescribed value exists on the target path, and the override function is configured such that a first threshold value is set as the prescribed threshold value while the in-lane automated driving function is active and a second threshold value is set as the prescribed threshold value when the EM function is activated in a poor visibility area, the second threshold value being greater than the first threshold value.

Detection of the conditions ahead in lane of the vehicle by the system is likely to be delayed in a poor visibility area with poor visibility compared to an area with good visibility. If the EM function is activated in a poor visibility area while the in-lane automated driving function by the ALKS is active, there is a possibility that the driver will be panicked by the emergency avoidance control under conditions of poor visibility, and perform excessive driving operations, which may cause an override to be executed unintentionally. If an excessive override operation is executed, there is a possibility of creating a situation in which the vehicle 1 intrudes into the opposite lane or veers off the road. Accordingly, by setting the first threshold value as the prescribed threshold value while the in-lane automated driving function is active and setting the second threshold value greater than the first threshold value as the prescribed threshold value when the EM function is activated in a poor visibility area, an excessive override can be suppressed. Consequently, in situations in which driving operations by the driver are extremely difficult, such as when the EM function is activated in a poor visibility area, the safety functions of the ALKS can be used to achieve the emergency avoidance control. Also, since the handover of driving operations is suppressed when the EM is activated during which driving operations are burdensome, the risks arising from the handover of driving operations to the driver can be suppressed.

The override function is configured such that a third threshold value is set as the prescribed threshold value when the EM function is activated outside a poor visibility area, the third threshold value being less than the second threshold value and greater than the first threshold value.

By making the override threshold values, when the EM function is activated, greater than that of when the normal in-lane automated driving function by the ALKS is active, an override by the driver when the EM is activated can be suppressed and emergency avoidance control using the safety functions of the ALKS can be achieved. Note that the second threshold value when the EM is activated in a poor visibility area is greater than the third threshold value when the EM is activated outside a poor visibility area. Consequently, in the case in which the EM function is activated in an area with good visibility, an override is achieved more easily than the case in which the EM function is activated in a poor visibility area, and collision avoidance through manual driving operations by the driver can be expected in areas of good visibility. Also, in the case in which the EM function is activated in a poor visibility area, an override by the driver is suppressed more than in an area with good visibility, and the safety functions of the ALKS can be used to achieve the emergency avoidance control.

The degree of visibility is defined as the visible distance at which an obstacle on the road is visible, and is determined on the basis of road information about the radius of curvature and the vertical grade of the road, and landmarks that exist along the road. The prescribed value for determining the degree of visibility is defined as the braking distance required to come to a braking stop without colliding with an obstacle after detecting the obstacle on the target path, and is determined on the basis of road information and speed limit information on the target path. The path generating part 12 determines that a poor visibility area exists if the visible distance is less than the braking distance.

Since the degree of visibility is determined as a visible distance based on road information and the existence of a poor visibility area is determined through a comparison with the braking distance required for the vehicle 1 to come to a braking stop without colliding with an obstacle on the basis of road information and speed limit information, the existence of a poor visibility area can be determined objectively in advance, without using information from the external sensor 21 or the like.

The path generating part 12 has an EM path-setting part (evacuation area setting part) 122 that sets an emergency evacuation area on the target path in case of activation of the EM function on the basis of location information and map information of the vehicle while the in-lane automated driving function is active, and the EM path-setting part 122 is configured to select a target stop position from inside the emergency evacuation area when the EM function is activated.

Since an emergency evacuation area is constantly set on the target path while the in-lane automated driving function by the ALKS is active, a target stop position can be set inside the emergency evacuation area quickly when the EM is activated.

### Second Embodiment

Hereinafter, a driving control apparatus for vehicle according to a second embodiment of the present invention will be described. The basic configuration of the driving control apparatus for vehicle according to the second embodiment is similar to the first embodiment described above. Hereinafter, differences from the first embodiment will be described primarily.

In the first embodiment described above, the existence of a poor visibility area is determined on the basis of road information about the road alignment, landmarks that exist along the road, and the like on the target path on which the vehicle 1 travels. In the second embodiment, it is further determined on the basis of road information whether a poor visibility area is a lateral poor visibility area in which the degree of visibility is poor in the lateral direction of the vehicle, or a longitudinal poor visibility area in which the degree of visibility is poor in the longitudinal direction of the vehicle.

For example, if the target path is a curved path, visibility in the lateral direction may be poor due to the radius of curvature of the road and landmarks that exist along the road. Accordingly, an area in which visibility in the lateral direction is poor and the visible distance to an obstacle, that exists in the direction of travel of the vehicle 1, is less than the braking distance can be determined to be a lateral poor visibility area. For example, if the target path is a slope, the visibility in the longitudinal direction may be poor due to the vertical grade of the road. Accordingly, an area in which visibility in the longitudinal direction is poor and the visible distance to an obstacle, that exists in the direction of travel of the vehicle 1, is less than the braking distance can be determined to be a longitudinal poor visibility area.

Also, if the target path is a curved path and a slope, visibility in the lateral and longitudinal directions may be poor due to the radius of curvature and vertical grade of the road, and landmarks that exist along the road. Accordingly, an area in which visibility in the lateral and longitudinal directions is poor and the visible distance to an obstacle, that exists in the direction of travel of the vehicle 1, is less than the braking distance is determined to be a poor visibility area in the longitudinal and lateral directions. Information on lateral poor visibility areas, longitudinal poor visibility areas, and poor visibility areas in the longitudinal and lateral directions is stored in advance in the map information database 23, in association with the map information.

In the second embodiment, it is configured such that the override threshold values (second threshold values) when the EM is activated in a poor visibility area are set to different values depending on the direction in which visibility is poor. Hereinafter, the setting of the override threshold values when the EM is activated in a poor visibility area according to the direction of poor visibility will be described.

With regard to the accelerator override threshold value OEemb when the EM is activated in a poor visibility area, an accelerator override threshold value OEemblo for a longitudinal poor visibility area is set to a value greater than an accelerator override threshold value OEembla for a lateral poor visibility area. An accelerator override threshold value OEemblao for a poor visibility area in the longitudinal and lateral directions is set to the same value as the accelerator override threshold value OEemblo for a longitudinal poor visibility area. That is, OEemblao = OEemblo > OEembla.

With regard to the brake override threshold value OPemb when the EM is activated in a poor visibility area, a brake override threshold value OPemblo for a longitudinal poor visibility area is set to a value greater than a brake override threshold value OPembla for a lateral poor visibility area. A brake override threshold value OPemblao for a poor visibility area in the longitudinal and lateral directions is set to the same value as the brake override threshold value OPemblo for a longitudinal poor visibility area. That is, OPemblao = OPemblo > OPembla.

With regard to the steering override threshold value OTemb when the EM is activated in a poor visibility area, a steering override threshold value OTembla for a lateral poor visibility area is set to a value greater than a steering override threshold value OTemblo for a longitudinal poor visibility area. A steering override threshold value OTemblao for a poor visibility area in the longitudinal and lateral directions is set to the same value as the steering override threshold value OTembla for a lateral poor visibility area. That is, OTemblao = OTembla > OTemblo.

Accordingly, if the EM function is activated in a lateral poor visibility area on a road with a left curve in which the visible distance ahead to the left is short, for example, the steering override threshold value is set to the steering override threshold value OTembla for a lateral poor visibility area. Consequently, an override can be suppressed even if the driver performs a steering operation in the direction away from an obstacle ahead to the left, and the risk of the vehicle 1 intruding into the opposite lane can be suppressed.

Also, if the EM function is activated in a longitudinal and lateral poor visibility area on a road with a downhill grade and with a right sidewall in which the visible distance in the longitudinal and lateral directions is short, for example, the steering override threshold value is set to the steering override threshold value OTemblao for a longitudinal and lateral poor visibility area and the accelerator override threshold value is set to the accelerator override threshold value OEemblao for a longitudinal and lateral poor visibility area. Consequently, an override can be suppressed even if the driver performs a steering operation in the direction of the right sidewall, and the risk of the vehicle 1 colliding into the right sidewall can be suppressed. Also, an override can be suppressed even if the driver performs an accelerator pedal operation on the downhill grade, and the risk of the vehicle 1 accelerating suddenly and veering off the road can be suppressed.

In the driving control apparatus for the vehicle 1 according to the second embodiment described above, operation and effects like the following can be exhibited in addition to the effects according to the first embodiment described above.

The path generating part 12 is configured to determine, on the basis of road information, whether a poor visibility area is a lateral poor visibility area in which the degree of visibility is poor in the lateral direction of the vehicle or a longitudinal poor visibility area in which the degree of visibility is poor in the longitudinal direction of the vehicle. The override function is configured to set each of a steering override threshold value for a steering intervention by the driver and acceleration/deceleration override threshold values for an acceleration/deceleration control intervention by the driver as the prescribed threshold values. The override function is configured such that, with regard to the steering override threshold value and the acceleration/deceleration override threshold values to be set as the second threshold values when the EM function is activated in a poor visibility area, the steering override threshold value OTembla for a lateral poor visibility area is greater than the steering override threshold value OTemblo for a longitudinal poor visibility area, and the acceleration/deceleration override threshold values OEemblo, OPemblo for a longitudinal poor visibility area are greater than the acceleration/deceleration override threshold values OEembla, OPembla for a lateral poor visibility area.

In this way, it is determined whether a poor visibility area is a lateral poor visibility area in which the degree of visibility is poor in the lateral direction of the vehicle or a longitudinal poor visibility area in which the degree of visibility is poor in the longitudinal direction of the vehicle, and the acceleration/deceleration override threshold values and steering override threshold value are each set to different values depending on the direction in which visibility is poor. Accordingly, acceleration/deceleration overrides and a steering override can each be suppressed appropriately, with particular consideration for the risk of an override due to a control intervention by the driver according to the road alignment.

### Modifications

(1) In the embodiments described above, the emergency evacuation area is set in an area on the side edge of the road, including an area such as a shoulder or a roadside strip outside the lane in which the vehicle 1 travels. However, the configuration is not limited thereto, and the emergency evacuation area can also be set to a shoulder-side area inside the lane in which the vehicle 1 travels.
(2) In the embodiments described above, the emergency evacuation area is set on the target path in case of activation of the EM function constantly while the automated lane keeping driving by the ALKS is being executed. However, the configuration is not limited thereto, and it may also be configured such that the emergency evacuation area is set when it is determined that a poor visibility area exists on the target path. Accordingly, the emergency evacuation area is set in advance in a poor visibility area, and therefore a target stop position can be set inside the emergency evacuation area quickly when the EM is activated.
(3) In the embodiments described above, the target stop position is changed depending on the reason for activation of the EM function. However, the configuration is not limited thereto, and it may also be configured such that the target stop position is set inside a preset emergency evacuation area, regardless of the reason for activation of the EM function.
(4) In the embodiments described above, the first threshold values are set as the override threshold values while the in-lane automated driving function is active, and the second threshold values greater than the first threshold values are set when the EM function is activated in a poor visibility area. However, the configuration is not limited thereto, and the override threshold values may be set to maximum values or override may be disabled when the EM function is activated in a poor visibility area.

Although several embodiments of the present invention have been described above, it is noted that the present invention is not limited to the above embodiments, and that the scope of the present invention is defined by the appended claims.

### [Reference Signs List]

- 1: Vehicle
- 10: Automated driving controller
- 11: Environmental condition estimating part
- 12: Path generating part
- 121: ALKS path-setting part
- 122: EM path-setting part
- 13: Vehicle control part
- 15: ACC controller
- 16: LKA controller
- 21: External sensor
- 22: Internal sensor
- 23: Map information database
- 24: Positioning means (GNSS)
- 31: EPS controller
- 32: Engine controller
- 33: ESP/ABS controller
- 34: Manual steering (steering wheel)
- 35: Manual control (accelerator pedal)
- 36: Manual control (brake pedal)

## Claims

1. A driving control apparatus for a vehicle (1), comprising:
an environmental condition estimating part (11) including a surrounding recognition function for recognizing a driving lane of the vehicle (1), neighboring lanes, other vehicles in each of the lanes, and a surrounding environment, and a function for obtaining a state of movement of the vehicle (1);
a path generating part (12) configured to generate a target path on the basis of information obtained by the environmental condition estimating part (11); and
a vehicle control part (13) configured to perform speed control and steering control for the vehicle (1) to follow the target path,
the driving control apparatus for a vehicle (1) having:
an in-lane automated driving function that performs in-lane automated driving for maintaining a set speed if no other vehicle is present ahead in the lane of the vehicle (1) and maintaining a set inter-vehicle distance if another vehicle is present ahead;
an EM function that executes an emergency avoidance control, including activation of emergency braking, if a collision with an obstacle present ahead in the lane of the vehicle (1) is predicted; and
an override function that, if there is a control intervention equal to or greater than a prescribed threshold value by the driver while the in-lane automated driving function or the EM function is active, stops the function which is active and transfers control to the driver, **characterized in that**:
the path generating part (12) is configured to determine whether a poor visibility area in which a degree of visibility of a road is less than a prescribed value exists on the target path;
the override function is configured such that a first threshold value (OEd, Opd, Otd) is set as the prescribed threshold value while the in-lane automated driving function is active, and a second threshold value (OEemb, OPemb, OTemb) is set as the prescribed threshold value when the EM function is activated in the poor visibility area, the second threshold value (OEemb, OPemb, OTemb) being greater than the first threshold value (OEd, OPd, OTd);
the override function is configured such that a third threshold value (OEemg, OPemg, OTemg) is set as the prescribed threshold value when the EM function is activated outside the poor visibility area; and
the third threshold value (OEemg, OPemg, OTemg) is less than the second threshold value (OEemb, OPemb, OTemb) and greater than the first threshold value (OEd, OPd, OTd).

2. The driving control apparatus for a vehicle (1) according to claim 1, wherein:
the degree of visibility is defined as a visible distance at which an obstacle on the road is visible, and is determined on the basis of road information about a radius of curvature and a vertical grade of the road, and landmarks that exist along the road;
the prescribed value is defined as a braking distance required to come to a braking stop without colliding with an obstacle after detecting the obstacle on the target path, and is determined on the basis of the road information and speed limit information on the target path; and
the path generating part (12) determines that the poor visibility area exists if the visible distance is less than the braking distance.

3. The driving control apparatus for a vehicle (1) according to claim 2, wherein:
the path generating part (12) is configured to determine, on the basis of the road information, whether the poor visibility area is a lateral poor visibility area in which the degree of visibility is poor in a lateral direction of the vehicle or a longitudinal poor visibility area in which the degree of visibility is poor in a longitudinal direction of the vehicle (1);
the override function is configured to set, as the prescribed threshold value, a steering override threshold value for a steering intervention by the driver, and acceleration/deceleration override threshold values for an acceleration/deceleration control intervention by the driver; and
the override function is configured such that, with regard to the steering override threshold value and the acceleration/deceleration override threshold values to be set as the second threshold value (OEemb, OPemb, OTemb) when the EM function is activated in a poor visibility area,
the steering override threshold value for the lateral poor visibility area (OTembla) is greater than the steering override threshold value for the longitudinal poor visibility area (OTemblo) and
the acceleration/deceleration override threshold values for the longitudinal poor visibility area (OEemblo, OPemblo) are greater than the acceleration/deceleration override threshold values for the lateral poor visibility area (OEembla, OPembla).

4. The driving control apparatus for a vehicle (1) according to any one of claims 1 to 3, wherein:
the path generating part (12) has an evacuation area setting part (122) that sets an emergency evacuation area on the target path in case of activation of the EM function on the basis of location information and map information of the vehicle (1) while the in-lane automated driving function is active; and
the evacuation area setting part (122) is configured to select a target stop position from inside the emergency evacuation area when the EM function is activated.

## Patentansprüche

1. Fahrsteuervorrichtung für ein Fahrzeug (1), umfassend:
einen Umgebungsbedingungsschätzteil (11), welcher eine Umgebungserkennungsfunktion zum Erkennen einer Fahrspur des Fahrzeugs (1), benachbarter Spuren, anderer Fahrzeuge in jeder der Spuren und einer Umgebung und eine Funktion zum Erhalten eines Zustands einer Bewegung des Fahrzeugs (1) umfasst;
einen Wegerzeugungsteil (12), welcher dazu eingerichtet ist, auf der Grundlage von durch den Umgebungsbedingungsschätzteil (11) erhaltenen Informationen einen Zielweg zu erzeugen; und
einen Fahrzeugsteuerteil (13), welcher dazu eingerichtet ist, eine Geschwindigkeitssteuerung und eine Lenksteuerung für das Fahrzeug (1) durchzuführen, um dem Zielweg zu folgen,
wobei die Fahrsteuervorrichtung für ein Fahrzeug (1) aufweist:
eine Funktion eines spurgetreuen automatisierten Fahrens, welche ein spurgetreues automatisiertes Fahren zum Beibehalten einer eingestellten Geschwindigkeit durchführt, wenn sich voraus kein anderes Fahrzeug in der Spur des Fahrzeugs (1) befindet, und zum Beibehalten eines eingestellten Fahrzeugzwischenabstands, wenn sich voraus ein anderes Fahrzeug befindet;
eine EM-Funktion, welche eine Unfallvermeidungssteuerung ausführt, die eine Aktivierung einer Notbremsung umfasst, wenn eine Kollision mit einem Hindernis vorhergesagt wird, welches sich voraus in der Spur des Fahrzeugs (1) befindet; und
eine Überschreibungsfunktion, welche, wenn es durch den Fahrer eine Steuerungsintervention gibt, welche gleich wie oder größer als ein vorgeschriebener Schwellenwert ist, während die Funktion eines spurgetreuen automatisierten Fahrens oder die EM-Funktion aktiv ist, die Funktion stoppt, welche aktiv ist, und eine Steuerung an den Fahrer überträgt,
**dadurch gekennzeichnet, dass**:
der Wegerzeugungsteil (12) dazu eingerichtet ist, zu bestimmen, ob ein Bereich mit schlechter Sicht, in welchem ein Sichtbarkeitsgrad einer Straße kleiner ist als ein vorgeschriebener Wert, auf dem Zielweg vorhanden ist;
die Überschreibungsfunktion derart eingerichtet ist, dass ein erster Schwellenwert (OEd, OPd, OTd) als der vorgeschriebene Schwellenwert eingestellt ist, während die Funktion eines spurgetreuen automatisierten Fahrens aktiv ist, und ein zweiter Schwellenwert (OEemb, OPemb, OTemb) als der vorgeschriebene Schwellenwert eingestellt ist, wenn die EM-Funktion in dem Bereich mit schlechter Sicht aktiviert ist, wobei der zweite Schwellenwert (OEemb, OPemb, OTemb) größer ist als der erste Schwellenwert (OEd, OPd, OTd);
die Überschreibungsfunktion derart eingerichtet ist, dass ein dritter Schwellenwert (OEemg, OPemg, OTemg) als der vorgeschriebene Schwellenwert eingestellt ist, wenn die EM-Funktion außerhalb des Bereichs mit schlechter Sicht aktiviert ist; und
der dritte Schwellenwert (OEemg, OPemg, OTemg) kleiner als der zweite Schwellenwert (OEemb, OPemb, OTemb) und größer als der erste Schwellenwert (OEd, OPd, OTd) ist.

2. Fahrsteuervorrichtung für ein Fahrzeug (1) nach Anspruch 1, wobei:
der Sichtbarkeitsgrad als ein sichtbarer Abstand definiert ist, bei welchem ein Hindernis auf der Straße sichtbar ist, und auf der Grundlage von Straßeninformationen über einen Krümmungsradius und eine vertikale Steigung der Straße und Sehenswürdigkeiten, welche entlang der Straße vorhanden sind, bestimmt wird;
der vorgeschriebene Wert als ein Bremsabstand definiert ist, welcher erforderlich ist, um nach einem Detektieren des Hindernisses auf dem Zielweg zu einem Bremsstopp zu kommen, ohne mit einem Hindernis zu kollidieren, und auf der Grundlage der Straßeninformationen und von Geschwindigkeitsinformationen auf dem Zielweg bestimmt wird; und
der Wegerzeugungsteil (12) bestimmt, dass der Bereich mit schlechter Sicht vorhanden ist, wenn der sichtbare Abstand kleiner ist als der Bremsabstand.

3. Fahrsteuervorrichtung für ein Fahrzeug (1) nach Anspruch 2, wobei:
der Wegerzeugungsteil (12) dazu eingerichtet ist, auf der Grundlage der Straßeninformationen zu bestimmen, ob der Bereich mit schlechter Sicht ein lateraler Bereich mit schlechter Sicht, in welchem der Sichtbarkeitsgrad in einer lateralen Richtung des Fahrzeugs schlecht ist, oder ein longitudinaler Bereich mit schlechter Sicht ist, in welchem der Sichtbarkeitsgrad in einer longitudinalen Richtung des Fahrzeugs (1) schlecht ist,
die Überschreibungsfunktion dazu eingerichtet ist, als den vorgeschriebenen Schwellenwert einen Lenküberschreibungsschwellenwert für eine Lenkintervention durch den Fahrer und Schwellenwerte für eine Beschleunigungs-/Verzögerungsüberschreibung für eine Beschleunigungs-/Verzögerungsteuerungsintervention durch den Fahrer einzustellen; und
die Überschreibungsfunktion derart eingerichtet ist, dass in Bezug auf den Lenküberschreibungsschwellenwert und die Schwellenwerte für eine Beschleunigungs-/Verzögerungsüberschreibung, welche als der zweite Schwellenwert (OEemb, OPemb, OTemb) einzustellen sind, wenn die EM-Funktion in einem Bereich mit schlechter Sicht aktiviert ist,
der Lenküberschreibungsschwellenwert für den lateralen Bereich mit schlechter Sicht (OTembla) größer ist als der Lenküberschreibungsschwellenwert für den longitudinalen Bereich mit schlechter Sicht (OTemblo) und
die Schwellenwerte für eine Beschleunigungs-/Verzögerungsüberschreibung für den longitudinalen Bereich mit schlechter Sicht (OEemblo, OPemblo) größer sind als die Schwellenwerte für eine Beschleunigungs-/Verzögerungsüberschreibung für den lateralen Bereich mit schlechter Sicht (OEembla, OPembla).

4. Fahrsteuervorrichtung für ein Fahrzeug (1) nach einem der Ansprüche 1 bis 3, wobei:
der Wegerzeugungsteil (12) einen Evakuierungsbereichseinstellteil (122) aufweist, welcher in einem Fall einer Aktivierung der EM-Funktion auf der Grundlage von Standortinformationen und Karteninformationen des Fahrzeugs (1) einen Unfallevakuierungsbereich auf dem Zielweg einstellt, während die Funktion eines spurgetreuen automatisierten Fahrens aktiv ist; und
der Evakuierungsbereichseinstellteil (122) dazu eingerichtet ist, eine Zielstoppposition von innerhalb des Unfallevakuierungsbereichs auszuwählen, wenn die EM-Funktion aktiviert ist.

## Revendications

1. Appareil de commande de conduite pour un véhicule (1), comprenant :
une partie d'estimation de conditions environnementales (11) comportant une fonction de reconnaissance d'environnement permettant de reconnaître une voie de circulation du véhicule (1), des voies voisines, d'autres véhicules sur chacune des voies et un environnement alentour, et une fonction permettant d'obtenir un état de déplacement du véhicule (1) ;
une partie de génération de trajectoire (12) configurée pour générer une trajectoire cible sur la base d'informations obtenues par la partie d'estimation de conditions environnementales (11) ; et
une partie de commande de véhicule (13) configurée pour réaliser une commande de vitesse et une commande de direction pour que le véhicule (1) suive la trajectoire cible, l'appareil de commande de conduite pour un véhicule (1) présentant :
une fonction de conduite automatisée sur voie qui réalise une conduite automatisée sur voie permettant de maintenir une vitesse définie si aucun autre véhicule ne se trouve devant le véhicule sur la voie du véhicule (1) et de maintenir une distance entre véhicules définie si un autre véhicule se trouve devant le véhicule ;
une fonction EM qui exécute une commande d'évitement d'urgence, comportant l'activation d'un freinage d'urgence, si une collision avec un obstacle se trouvant devant sur la voie du véhicule (1) est prédite ; et
une fonction prioritaire qui, en cas d'intervention de commande égale ou supérieure à une valeur seuil prescrite par un conducteur pendant que la fonction de conduite automatisée sur la voie ou la fonction EM est active, arrête la fonction qui est active et transfère la commande au conducteur, **caractérisé en ce que** :
la partie de génération de trajectoire (12) est configurée pour déterminer s'il existe ou non une zone de mauvaise visibilité dans laquelle un degré de visibilité d'une route est inférieur à une valeur prescrite sur la trajectoire cible ;
la fonction prioritaire est configurée de sorte qu'une première valeur seuil (OEd, Opd, Otd) soit définie comme valeur seuil prescrite lorsque la fonction de conduite automatisée sur voie est active, et une deuxième valeur seuil (OEemb, OPemb, OTemb) soit définie comme valeur seuil prescrite lorsque la fonction EM est activée dans la zone de mauvaise visibilité, la deuxième valeur seuil (OEemb, OPemb, OTemb) étant supérieure à la première valeur seuil (OEd, OPd, OTd) ;
la fonction prioritaire est configurée de sorte qu'une troisième valeur seuil (OEemg, OPemg, OTemg) soit définie comme valeur seuil prescrite lorsque la fonction EM est activée à l'extérieur de la zone de mauvaise visibilité ; et
la troisième valeur seuil (OEemg, OPemg, OTemg) est inférieure à la deuxième valeur seuil (OEemb, OPemb, OTemb) et supérieure à la première valeur seuil (OEd, OPd, OTd).

2. Appareil de commande de conduite pour un véhicule (1) selon la revendication 1, dans lequel :
le degré de visibilité est défini comme une distance visible à laquelle un obstacle est visible sur la route et est déterminé sur la base d'informations routières concernant un rayon de courbure et une pente verticale de la route, et des repères existant le long de la route ;
la valeur prescrite est définie comme une distance de freinage nécessaire pour parvenir à un arrêt de freinage sans entrer en collision avec un obstacle après détection de l'obstacle sur la trajectoire cible, et est déterminée sur la base des informations routières et des informations de limitation de vitesse sur la trajectoire cible ; et
la partie de génération de trajectoire (12) détermine qu'il existe une zone de mauvaise visibilité si la distance visible est inférieure à la distance de freinage.

3. Appareil de commande de conduite pour un véhicule (1) selon la revendication 2, dans lequel :
la partie de génération de trajectoire (12) est configurée pour déterminer, sur la base des informations routières, si la zone de mauvaise visibilité est une zone de mauvaise visibilité latérale dans laquelle le degré de visibilité est mauvais dans une direction latérale du véhicule ou une zone de mauvaise visibilité longitudinale dans laquelle le degré de visibilité est mauvais dans une direction longitudinale du véhicule (1) ;
la fonction prioritaire est configurée pour définir, comme valeur seuil prescrite, une valeur seuil prioritaire de direction pour une intervention de direction par le conducteur, et des valeurs seuil prioritaires d'accélération/de décélération pour une intervention de commande d'accélération/de décélération par le conducteur ; et
la fonction prioritaire est configurée de sorte que, eu égard à la valeur seuil prioritaire de direction et aux valeurs seuil prioritaires d'accélération/de décélération devant être définies comme deuxième valeur seuil (OEemb, OPemb, OTemb) lorsque la fonction EM est activée dans une zone de mauvaise visibilité,
la valeur seuil prioritaire de direction pour la zone de mauvaise visibilité latérale (OTembla) est supérieure à la valeur seuil prioritaire de direction pour la zone de mauvaise visibilité longitudinale (OTemblo) et
les valeurs seuil prioritaires d'accélération/de décélération pour la zone de mauvaise visibilité longitudinale (OEemblo, OPemblo) sont supérieures aux valeurs seuil prioritaires d'accélération/de décélération pour la zone de mauvaise visibilité latérale (OEembla, OPembla).

4. Appareil de commande de conduite pour un véhicule (1) selon l'une quelconque des revendications 1 à 3, dans lequel :
la partie de génération de trajectoire (12) présente une partie de définition de zone d'évacuation (122) qui définit une zone d'évacuation d'urgence sur la trajectoire cible en cas d'activation de la fonction EM sur la base d'informations de localisation et d'informations cartographiques du véhicule (1) pendant que la fonction de conduite automatisée sur la voie est active ; et
la partie de définition de zone d'évacuation (122) est configurée pour sélectionner une position d'arrêt cible à partir de l'intérieur de la zone d'évacuation d'urgence lorsque la fonction EM est activée.
